# EUROPEAN PATENT APPLICATION

(11) **EP 1 884 678 A1**
(43) Date of publication of application: **06.02.2008**
(21) Application number: 07015195.6
(22) Date of filing: 02.08.2007
(51) Int. Cl.: F16D 27/105

(54) **Power transmission mechanism**

(30) Priority: 04.08.2006 JP 2006213042
(71) Applicant: KABUSHIKI KAISHA TOYOTA JIDOSHOKKI, Kariya-shi, Aichi-ken 448-8671 (JP)
(72) Inventor: Hoshino, Nobuaki c/o K. K. Toyota Jidoshokki, Kariya-shi, Aichi-ken (JP); Ota, Masaki c/o K. K. Toyota Jidoshokki, Kariya-shi, Aichi-ken (JP); Wang, Xiaoliang c/o K. K. Toyota Jidoshokki, Kariya-shi, Aichi-ken (JP)
(74) Representative: HOFFMANN EITLE

(57) **Abstract**

A first rotor (61) is rotatably supported by a housing (12). A second rotor (65) rotates integrally with a rotary shaft (16). A power transmission mechanism (60) is capable of transmitting power from the first rotor (61) to the second rotor (65). When supplied with a current, an electromagnetic coil (62) is capable of causing the armature plate (78) to adhere to the first rotor (61). In a state where the armature plate (78) adheres to the first rotor (61), the spring clutch (71) couples the second rotor (65) to the first rotor (61).
An urging member (74) is accommodated in the second rotor (65). The urging member (74) is located between the rotary shaft (16) and the armature plate (78). Therefore, the power transmission mechanism (60) is compact and achieves a high performance (Fig.1).

## Description

The present invention relates to a power transmission mechanism that permits power to be transmitted from an external driving source to a rotary shaft.

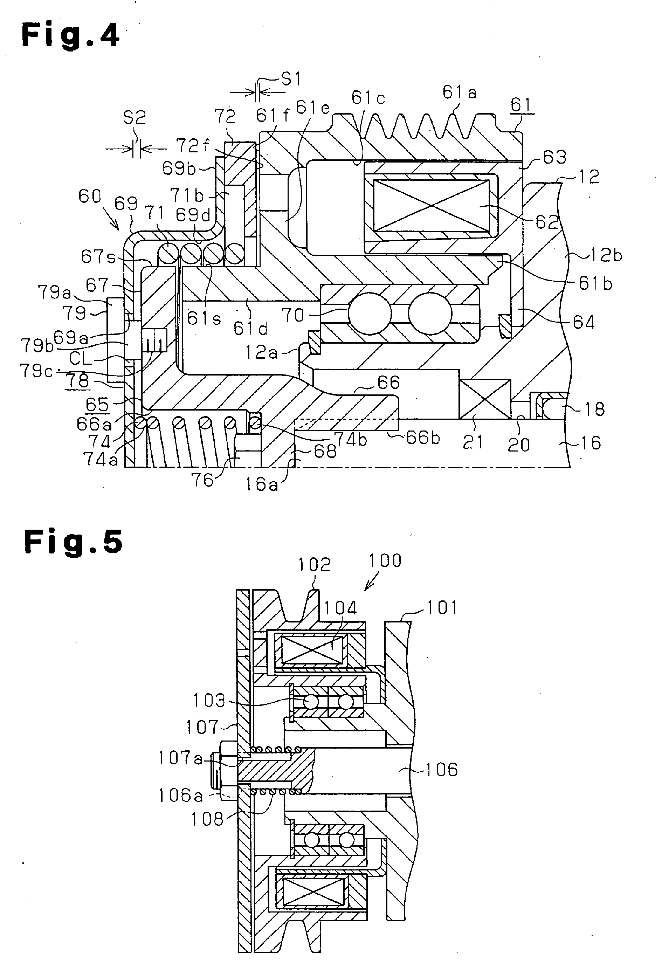

Fig. 5 illustrates a power transmission mechanism 100 disclosed in Japanese Laid-Open Utility Model Publication No. 59-107339. The power transmission mechanism 100 is capable of transmitting power of a vehicle engine (not shown) to a rotary shaft 106 of a refrigerant compressor of a vehicle air conditioner. A rotor 102 that receives power of the vehicle engine rotates relative to a housing 101 of the refrigerant compressor by means of a bearing 103. The housing 101 has an electromagnetic coil 104.

A disk-shaped armature 107 is fitted to the front end of the rotary shaft 106 by means of splines. As the electromagnetic coil 104 is turned on and off, the armature 107 is moved in the axial direction of the rotary shaft 106. The front end of the rotary shaft 106 has a spline 106a. The armature 107 has a spline bore 107a. The spline 106a is inserted in the spline bore 107a. The rotary shaft 106 extends through a compression coil spring 108. That is, the compression coil spring 108 is located about the rotary shaft 106 and in the power transmission mechanism 100.

When supplied with electricity, the electromagnetic coil 104 attracts the armature 107, thereby connecting the armature 107 to the rotor 102 against the urging force of the compression coil spring 108. As a result, the power of the engine is transmitted from the rotor 102 to the armature 107, and rotates the rotary shaft 106.

When supplied with no electricity, the electromagnetic coil 104 does not attract the armature 107. As a result, the compression coil spring 108 separates the armature 107 from the rotor 102. The power of the engine is thus not transmitted from the rotor 102 to the armature 107, and the rotary shaft 106 stops accordingly.

If the clearance between the spline 106a of the rotary shaft 106 and the spline bore 107a of the armature 107 is increased, the armature 107 is likely to chatter relative to the rotary shaft 106, the spline bore 107a and the spline 106a wear.

If the clearance between the spline bore 107a and the spline 106a is reduced to suppress the chattering of the armature 107 relative to the rotary shaft 106, the armature 107 cannot be smoothly moved relative to the rotary shaft 106. That is, the armature 107 cannot be smoothly moved relative to the rotor 102, which degrades the performance of the power transmission mechanism 100.

### SUMMARY OF THE INVENTION

An objective of the present invention is to provide a compact and high performance power transmission mechanism.

According to one aspect of the invention, a power transmission mechanism capable of transmitting power of an external driving source to a rotary shaft of a rotating machine is provided. The rotating machine has a housing. The power transmission mechanism includes a first rotor rotatably supported by the housing. The external driving source inputs power to the first rotor. The first rotor has a first circumferential surface. A second rotor rotates integrally with the rotary shaft. The second rotor is arranged coaxially with the first rotor. The power transmission mechanism is capable of transmitting power from the first rotor to the second rotor. The second rotor has a second circumferential surface. The first circumferential surface and the second circumferential surface are located in a common imaginary cylinder that extends along an axis of the rotary shaft. An armature plate is located outside of the second rotor. The armature plate is movable along the axis of the rotary shaft. The rotary shaft has an end that faces the armature plate. An electromagnetic coil is located inside of the first rotor. When supplied with a current, the electromagnetic coil is capable of causing the armature plate to adhere to the first rotor. In a state where the armature plate adheres to the first rotor, a spring clutch couples the second rotor to the first rotor. The spring clutch is wound about the first circumferential surface and the second circumferential surface. An urging member is accommodated in the second rotor. The urging member urges the armature plate away from the first rotor. The urging member is located between the end and the armature plate.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a longitudinal cross-sectional view illustrating a refrigerant compressor according to one embodiment of the present invention;
Fig. 2 is an enlarged cross-sectional view illustrating the electromagnetic clutch of Fig. 1 in a disengaged state;
Fig. 3 is an enlarged cross-sectional view illustrating the electromagnetic clutch of Fig. 2 in an engaged state;
Fig. 4 is an enlarged cross-sectional view illustrating an electromagnetic clutch according to a modified embodiment; and
Fig. 5 is a partially cross-sectional view illustrating a typical power transmission mechanism.

### DESCRIPTION OF THE PREFERRED EMBODIMENT

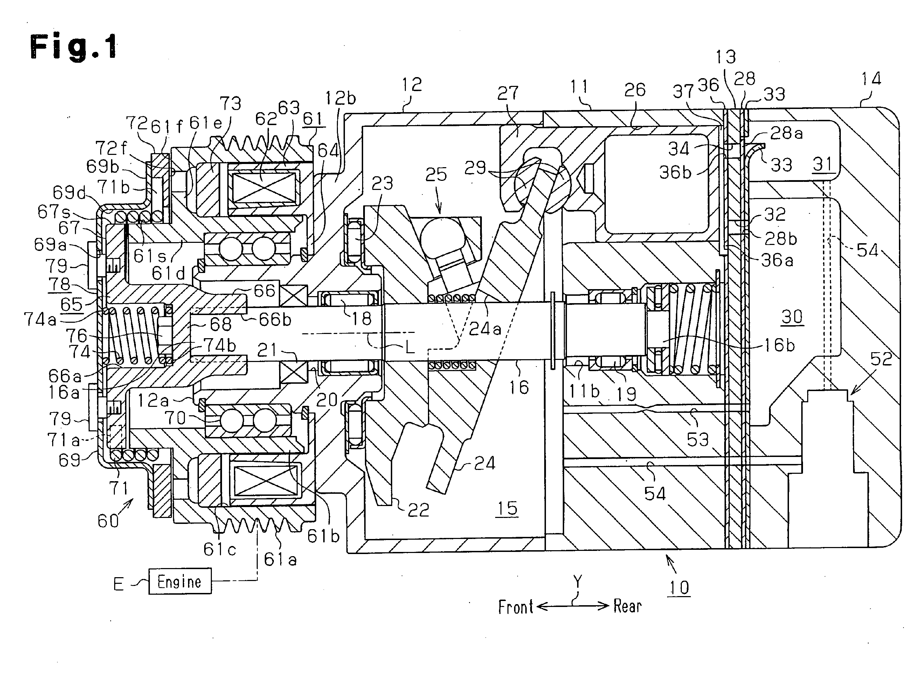

Figs. 1 to 3 illustrate one embodiment of the present invention.

Fig. 1 shows a refrigerant compressor 10 used in a vehicle air conditioner. Arrow Y of Fig. 1 represents the front and rear direction of the refrigerant compressor 10. In Fig. 1, the left side is referred to as the front side and the right side is referred to as the rear side. The refrigerant compressor 10, which is a rotating machine, has a housing that includes a cylinder block 11, a front housing member 12, and a rear housing member 14. The front housing member 12 is attached to the front end of the cylinder block 11, and the rear housing member 14 is attached to the rear end of the cylinder block 11. The cylinder block 11 and the rear housing member 14 hold therebetween a suction valve forming plate 36, a valve plate 13, a discharge valve forming plate 28, and a retainer 33.

The cylinder block 11 and the front housing member 12 define a control pressure chamber 15. The cylinder block 11 and the front housing member 12 rotatably support a rotary shaft 16 that extends through the control pressure chamber 15. A front end of the front housing member 12 includes a support cylinder 12a that surrounds the rotary shaft 16. An electromagnetic clutch 60, which is a power transmission mechanism, is capable of coupling an engine E, which is an external driving source, to the rotary shaft 16.

A first bearing 18 supports the rotary shaft 16 such that the rotary shaft 16 rotates relative to the front housing member 12. The front housing member 12 has a shaft sealing chamber 20, through which the rotary shaft 16 extends. The shaft sealing chamber 20 accommodates a shaft sealing member 21. The shaft sealing member 21 seals the space between a circumferential surface of the rotary shaft 16 and an inner circumferential surface of the front housing member 12, which faces the circumferential surface of the rotary shaft 16. The cylinder block 11 includes a shaft hole 11b for receiving a rear end 16b of the rotary shaft 16. The shaft hole 11b accommodates a second radial bearing 19. The second radial bearing 19 supports the rear end 16b of the rotary shaft 16 such that the rotary shaft 16 rotates relative to the cylinder block 11.

The control pressure chamber 15 accommodates a rotary support 22 and a swash plate 24. The rotary support 22 is fixed to the rotary shaft 16 to rotate integrally with the rotary shaft 16. A thrust bearing 23 is arranged between the rotary support 22 and an inner wall surface of the front housing member 12. The swash plate 24 has a shaft receiving hole 24a in a center portion. The rotary shaft 16 is inserted through the shaft receiving hole 24a, in such a manner that the rotary shaft 16 supports the swash plate 24. The hinge mechanism 25 couples the swash plate 24 with the rotary support 22. As a result, the swash plate 24 synchronously rotates with the rotary shaft 16 and the rotary support 22, and slides along an axis L of the rotary shaft 16. The hinge mechanism 25 permits the inclination angle of the swash plate 24 relative to the rotary shaft 16 to be changed.

The cylinder block 11 has cylinder bores 26 arranged about the rotary shaft 16 at equal angular intervals. The cylinder bores 26 are formed through the cylinder block 11 along the front-and-rear direction. Fig. 1 illustrates only one of the cylinder bores 26. Each cylinder bore 26 accommodates a single-headed piston 27. The piston 27 is movable along the front-and-rear direction. The pistons 27 closes the front openings of the cylinder bores 26, while the valve plate 13 closes the rear openings of the cylinder bores 26. As a result, a compression chamber 37 is defined in each cylinder bore 26. As the piston 27 reciprocates, the volume of the compression chamber 37 changes. Each piston 27 is coupled to a peripheral portion of the swash plate 24 by a pair of shoes 29.

The rear housing member 14 has a suction chamber 30 and a discharge chamber 31. The suction chamber 30, which is a suction pressure zone, is located in a center portion of the rear housing member 14, and the discharge chamber 31, which is a discharge pressure zone, encompasses the suction chamber 30. The suction chamber 30 and the discharge chamber 31 face the valve plate 13. The valve plate 13 has suction ports 32 and discharge ports 34 at positions that correspond to the respective cylinder bores 26. The suction ports 32 are located radially inward of the discharge ports 34.

The suction valve forming plate 36 has suction valve flaps 36a at positions that correspond to the respective suction ports 32, and discharge holes 36b at positions that correspond to the respective discharge ports 34. The discharge valve forming plate 28 has discharge valve flaps 28a at positions that correspond to the respective discharge ports 34, and suction holes 28b at positions that correspond to the respective suction ports 32. The retainer 33 limits the degree of opening of the discharge valve flaps 28a.

As each piston 27 moves from the top dead center to the bottom dead center, refrigerant in the suction chamber 30 is drawn into the compression chamber 37 through the suction hole 28b and the suction port 32, while flexing the suction valve flap 36a. As the piston 27 moves from the bottom dead center to the top dead center, refrigerant in the compression chamber 37 is compressed and discharged to the discharge chamber 31 through the discharge hole 36b and the discharge port 34, while flexing the discharge valve flap 28a. The high-pressure gas in the discharge chamber 31 is conducted out to an external refrigerant circuit (not shown) connected to the suction chamber 30. The refrigerant compressor 10 and the external refrigerant circuit form a refrigerant circulation circuit. After passing through the external refrigerant circuit, the refrigerant gas is drawn into the suction chamber 30. The cylinder block 11, the rotary shaft 16, the rotary support 22, the swash plate 24, the hinge mechanism 25, the pistons 27, and the shoes 29 form a compression mechanism of the refrigerant compressor 10. The engine E drives the compression mechanism through the rotary shaft 16.

The refrigerant compressor 10 includes a displacement control valve 52, a bleed passage 53, and a supply passage 54. The supply passage 54 supplies refrigerant gas in the discharge chamber 31 to the control pressure chamber 15. The bleed passage 53 releases the refrigerant gas in the control pressure chamber 15 to the suction chamber 30. The displacement control valve 52 controls the pressure in the control pressure chamber 15 by opening and closing the supply passage 54. The displacement control valve 52, which is an electromagnetic valve, is accommodated in the rear housing member 14.

When the pressure in the control pressure chamber 15 is changed, the difference between the pressure in the control pressure chamber 15 and the pressure in the cylinder bores 26 is changed. Accordingly, the inclination angle of the swash plate 24 is changed. As a result, the stroke of each piston 27, that is, the displacement of the compressor 10, is adjusted.

The electromagnetic clutch 60, which is an electromagnetic spring clutch, will now be described.

The electromagnetic clutch 60 includes a rotor 61, a hub 65, an armature plate 78, an electromagnetic coil 62, a spring clutch 71, and an urging spring 74.

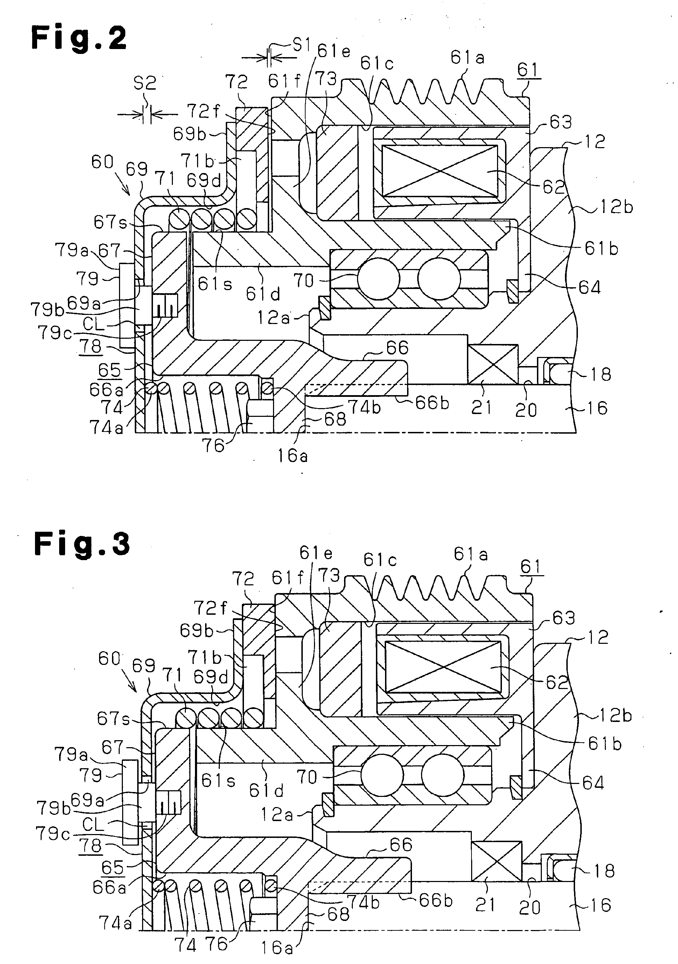

As shown in Figs. 1 and 2, a third radial bearing 70 supports the rotor 61 such that the rotor 61 rotates relative to the outer circumference of the support cylinder 12a. The rotor 61, which is a first rotor, is made of a magnetic material. The rotor 61 includes integrated components, which are a belt receiving portion 61a, a supported cylinder 61b, a coupling cylinder 61d, and a coupling flange 61e. The outer ring of the third radial bearing 70 supports the supported cylinder 61b. The coupling cylinder 61d extends forward from the supported cylinder 61b. The coupling cylinder 61d extends along the axis L, and protrudes further forward than the support cylinder 12a. The coupling flange 61e extends radially outward from the boundary between the supported cylinder 61b and the coupling cylinder 61d. The cylindrical belt receiving portion 61a extends from the outer edge of the coupling flange 61e toward the rear housing member 14 along the axis L. The belt receiving portion 61a and the supported cylinder 61b form a double cylinder structure. The belt receiving portion 61a accommodates the supported cylinder 61b. A belt (not shown) is hooked to the output shaft of the engine E and the belt receiving portion 61a. That is, while the engine E is running, the rotor 61 is always rotated.

A support portion 63, which is made of a magnetic material, supports the electromagnetic coil 62 in relation to a front wall 12b of the front housing member 12. That is, the support portion 63, or an accommodation body, accommodates the electromagnetic coil 62. The belt receiving portion 61a, the supported cylinder 61b, and the coupling flange 61e form an annular accommodation recess 61c. The support portion 63 is located in the accommodation recess 61c. The cylindrical support portion 63 includes an annular flange 64 that extends radially inward. The flange 64 is supported by the front wall 12b and the outer circumferential surface of the support cylinder 12a. The supply of current to electromagnetic coil 62 can be switched between a forward direction and a reverse direction.

A clearance exists between the inner surface of the accommodation recess 61c and the support portion 63. Specifically, a clearance exists between the inner circumferential surface of the belt receiving portion 61a and the outer circumferential surface of the support portion 63, and another clearance exists between the outer circumferential surface of the supported cylinder 61b and the inner circumferential surface of the support portion 63. That is, the rotor 61 can be rotated relative to the electromagnetic coil 62.

A permanent magnet 73 is fitted in the accommodation recess 61c. The permanent magnet 73 is located forward of the electromagnetic coil 62.

As shown in Fig. 2, the hub 65, which is a second rotor, is fixed to a front end 16a of the rotary shaft 16. That is, the hub 65 rotates integrally with the rotary shaft 16. The hub 65 includes integrated components, which are a hub cylinder 66 and a hub flange 67. The front end 16a of the rotary shaft 16 is inserted into the hub cylinder 66, so that the hub cylinder 66 is attached to the rotary shaft 16. The hub cylinder 66 extends along the axis L. The hub flange 67 flares from the front end of the hub cylinder 66 perpendicularly in relation to the axis L. The hub cylinder 66 has a partition wall 68 at the center. The partition wall 68 divides the interior of the hub cylinder 66 into a first recess 66a opened forward and a second recess 66b opened rearward.

The front end 16a of the rotary shaft 16 is fitted to the second recess 66b by means of splines. As a result, the rotational force of the hub 65 is sufficiently transmitted to the rotary shaft 16. The first recess 66a accommodates a fixing bolt 76. The fixing bolt 76 fixes the partition wall 68 to the front end 16a of the rotary shaft 16. Thus, the hub 65 does not move along the axis L in relation to the rotary shaft 16.

The rear surface of the hub flange 67 faces the front surface of the coupling cylinder 61d. The coupling cylinder 61d has a first outer circumferential surface 61s, and the hub flange 67 has a second outer circumferential surface 67s. In other words, the first outer circumferential surface 61s is a circumferential surface of the rotor 61, and the second outer circumferential surface 67s is a circumferential surface of the hub 65. The first outer circumferential surface 61s and the second outer circumferential surface 67s are in a common imaginary cylinder about the axis L. The diameter of the second outer circumferential surface 67s is equal to the diameter of the first outer circumferential surface 61s.

The armature plate 78 covers the hub 65 from the front. In other words, the armature plate 78 is located outside of the hub 65. The armature plate 78 includes a cover 69 and an armature 72. The cover 69 is shaped as a hollow cylinder with a closed end and covers the hub 65 and the coupling cylinder 61d from the front. That is, the cover 69 covers the first outer circumferential surface 61s and the second outer circumferential surface 67s. The cover 69 faces the front end of the hub 65 and the front end 16a of the rotary shaft 16. The cover 69 has a support flange 69b that flares radially outward from the open end. An annular armature 72 is attached to the support flange 69b. The armature 72 is made of a magnetic material. With respect to the axis L, the armature 72 is located between the support flange 69b and the coupling flange 61e of the rotor 61. In other words, from the front to the rear, the armature 72, the coupling flange 61e, the permanent magnet 73, and the electromagnetic coil 62 are arranged in this order.

Support bolts 79 couples the armature plate 78 to the hub 65 in such a manner that the armature plate 78 is movable relative to the hub 65. That is, the armature plate 78 is movable in the direction of the axis L with respect to the hub 65. The support bolts 79, which function as fastening members, secure the cover 69 to the hub flange 67 at positions displaced from the axis L. The cover 69 includes through holes 69a at positions displaced from the axis L. Each support bolt 79 is passed through the corresponding through hole 69a and threaded to the hub flange 67. In other words, the armature plate 78 is coupled to the hub 65 while being located forward of the hub 65, that is, while being located outside of the hub 65 in the mechanism of the electromagnetic clutch 60. A center portion of the cover 69 faces the first recess 66a.

Each support bolt 79 includes a bolt head 79a, a shaft portion 79b, and a threaded portion 79c. The shaft portion 79b extends from the bolt head 79a, and the threaded portion 79c is formed in a distal portion of the shaft portion 79b. The threaded portion 79c is threaded to the hub flange 67. The diameter of the bolt head 79a is larger than the diameter of the through hole 69a. The diameter of the shaft portion 79b is smaller than the diameter of the through hole 69a. As shown in Fig. 2, a clearance CL exists between the circumferential surface of the through hole 69a and the support bolt 79. The dimension of the shaft portion 79b in the direction of the axis L is greater than the thickness of the cover 69. Therefore, the armature plate 78 is movable in the direction of the axis L between the bolt head 79a and the hub flange 67. In other words, the armature plate 78 is movable in the direction of the axis L with respect to the rotor 61, the hub 65, and the rotary shaft 16.

The armature 72 has a second friction surface 72f that faces the coupling flange 61e. The coupling flange 61e has a first friction surface 61f that faces the armature 72. The second friction surface 72f is an armature friction surface, and the first friction surface 61f is a rotor friction surface. As shown in Fig. 2, when the cover 69 contacts the bolt heads 79a, a first space S1 exists between the second friction surface 72f and the first friction surface 61f.

The circumferential surface of the first recess 66a, the first outer circumferential surface 61s, and the second outer circumferential surface 67s are coaxially arranged. The first recess 66a accommodates the urging spring 74, which functions as an urging member. The urging spring 74, which is a coil spring, is located between the rotary shaft 16 and the armature plate 78. In other words, the urging spring 74 is located forward of the rotary shaft 16. The urging spring 74 has a front end 74a that contacts a center portion of the cover 69 and a rear end 74b that contacts the partition wall 68.

The urging spring 74 urges the armature plate 78 away from the rotor 61. That is, the urging spring 74 urges the second friction surface 72f away from the first friction surface 61f. The bolt head 79a defines the limit of the forward movement of the cover 69. When the armature plate 78 moves away from the bolt heads 79a, the urging spring 74 contracts.

As shown in Fig. 2, when the cover 69 contacts the bolt heads 79a, a second space S2 exists between the cover 69 and the hub 65. The second space S2 is larger than the first space S1. That is, the second friction surface 72f contacts the first friction surface 61f without causing the cover 69 to contact the hub 65.

When a current in the forward direction is supplied to the electromagnetic coil 62, the magnetic flux generated by the permanent magnet 73 and the magnetic flux generated by the electromagnetic coil 62 flow in the same direction in the armature 72. Thus, the armature 72 adheres to the rotor 61 against the urging force of the urging spring 74. In a state where the armature 72 contacts the rotor 61, the rotor 61 and the armature 72 form a closed magnetic flux circuit in which the magnetic flux of the permanent magnet 73 flows. In other words, the coupling flange 61e and the armature 72 form a closed magnetic flux circuit. The magnetic flux of the permanent magnet 73, which flows in the closed magnetic flux circuit, reliably causes the armature 72 to adhere to the rotor 61. Therefore, when the armature 72 adheres to the rotor 61, if the current supply to the electromagnetic coil 62 is stopped, the armature 72 continues to adhere to the rotor 61 against the urging force of the urging spring 74. Therefore, it is only necessary to supply a current in the forward direction for a moment to engage the electromagnetic clutch 60 from the disengaged state. Thereafter, the engaged state of the electromagnetic clutch 60 is maintained even if the current supply to the electromagnetic coil 62 is stopped. As a result, the electrical power consumption is reduced.

When a current in the reverse direction is supplied to the electromagnetic coil 62, the magnetic flux generated by the permanent magnet 73 and the magnetic flux generated by the electromagnetic coil 62 flow in opposite directions in the armature 72. Therefore, the force of the permanent magnet 73 that attracts the armature 72 is cancelled by the magnetic flux of the electromagnetic coil 62. As a result, the armature 72 is separated from the rotor 61 by the urging force of the urging spring 74. That is, the second friction surface 72f separates from the first friction surface 61f. In a state where the armature 72 is separated from the rotor 61, the armature 72 and the rotor 61 do not form a closed magnetic flux circuit in which the magnetic flux of the permanent magnet 73 flows. In a state where there is an open magnetic flux circuit, when the current supply to the electromagnetic coil 62 is stopped, the urging spring 74 maintains the armature 72 in state away from the rotor 61 against the ) magnetic force of the permanent magnet 73. That is, the force of the urging spring 74 is smaller than the magnetic force of the permanent magnet 73 that acts on the closed magnetic flux circuit, but is greater than the magnetic force of the permanent magnet 73 that acts on the open magnetic flux circuit. Therefore, it is only necessary to supply a current in the reverse direction for a moment to disengage the electromagnetic clutch 60 from the engaged state. Thereafter, the disengaged state of the electromagnetic clutch 60 is maintained even if the current supply to the electromagnetic coil 62 is stopped. That is, the electromagnetic coil 62 only needs to be supplied with a current when the engaged state and the disengaged state of the electromagnetic clutch 60 are switched. As a result, the electrical power consumption is reduced.

As shown in Fig. 1, the spring clutch 71, which is a coil spring, is wound about the first outer circumferential surface 61s and the second outer circumferential surface 67s. The spring clutch 71 is wound about the first outer circumferential surface 61s and the second outer circumferential surface 67s, while extending over a space along the axis L between the first outer circumferential surface 61s and the second outer circumferential surface 67s. The spring clutch 71 is located radially inward of an inner circumferential surface 69d of the cover 69. That is, the spring clutch 71 is located in a space between the first outer circumferential surface 61s and the cover 69, and a space between the second friction surface 72f and the cover 69.

As shown in Fig. 1, the spring clutch 71 has a first end 71a attached to the hub flange 67 and a second end 71b attached to the armature 72. When the second friction surface 72f is separated from the first friction surface 61f as shown in Figs. 1 and 2, the armature 72 does not rotated relative to the hub 65. In this case, the diameter of the spring clutch 71 is greater than the diameter of the first outer circumferential surface 61s and also than the diameter of the second outer circumferential surface 67s. That is, the spring clutch 71 is separated from the first outer circumferential surface 61s and from the second outer circumferential surface 67s.

When the second friction surface 72f adheres to the first friction surface 61f as shown in Fig. 3, rotation of the rotor 61 causes the armature 72 relative to the hub 65. Accordingly, the spring clutch 71 is twisted in such a manner than the diameter of the spring clutch 71 is reduced. As a result, the spring clutch 71 is wound about the first outer circumferential surface 61s and the second outer circumferential surface 67s.

The operation of the electromagnetic clutch 60 will now be described.

In a state where the second friction surface 72f is separated from the first friction surface 61f as shown in Figs. 1 and 2, when a current of the forward direction is supplied to the electromagnetic coil 62, the magnetic flux of the electromagnetic coil 62 intensifies the magnetic flux of the permanent magnet 73. As a result, the second friction surface 72f moves along the axis L by the distance corresponding to the first space S1 against the urging force of the urging spring 74 as shown in Fig. 3, and adheres to the first friction surface 61f. As a result, the rotor 61 is coupled to the armature plate 78 with respect to the rotation direction.

As a result, the rotor 61 rotates and the armature plate 78 rotates. Also, the armature plate 78 rotates relative to the hub 65. Accordingly, the diameter of the spring clutch 71 is reduced, and the spring clutch 71 couples the first outer circumferential surface 61s to the second outer circumferential surface 67s with respect to the rotation direction. As a result, the rotation of the rotor 61 is transmitted to the hub 65 via the spring clutch 71. The rotation of the rotor 61 is transmitted to the hub 65 via the armature plate 78 and the support bolts 79. In this manner, the electromagnetic force of the electromagnetic coil 62, the magnetic force of the permanent magnet 73, and the winding force of the spring clutch 71 firmly couples the rotor 61 to the hub 65.

When the second friction surface 72f adheres to the first friction surface 61f, rotation of the rotor 61 is transmitted to the armature 72 by means of the frictional force between the first friction surface 61f and the second friction surface 72f. As a result, since the transmitted rotation acts to rotate the armature 72 relative to the hub 65, the reduced diameter of the spring clutch 71 is maintained. That is, a state is maintained in which the spring clutch 71 couples the first outer circumferential surface 61s to the second outer circumferential surface 67s.

In a state where the second friction surface 72f adheres to the first friction surface 61f, when a current to the electromagnetic coil 62 is stopped, the magnetic force of the permanent magnet 73 continues causing the second friction surface 72f to adhere to the first friction surface 61f. As a result, the spring clutch 71 continues coupling the rotor 61 to the hub 65. Thus, the electromagnetic clutch 60 continues being capable of transmitting the power of the engine E to the rotary shaft 16.

When a current in the reverse direction is applied to the electromagnetic coil 62, the magnetic force acting on the armature 72 is reduced, and the spring 74 separates the second friction surface 72f from the first friction surface 61f. As a result, the electromagnetic clutch 60 is disengaged, and the rotor 61 is disconnected from the armature 72. That is, the rotor 61 is disconnected from the hub 65, the transmission of power from the engine E to the rotary shaft 16 is stopped.

The preferred embodiment has the following advantages.
(1) The hub 65 accommodates the urging spring 74. The urging spring 74 urges the armature plate 78 away from the rotor 61. The urging spring 74 is located between the front end 16a of the rotary shaft 16 and the armature plate 78. That is, the urging spring 74 is located within the mechanism of the electromagnetic clutch 60. The size of the electromagnetic clutch 60 is therefore prevented from being increased.
(2) The armature plate 78 is movable in the direction of the axis L with respect to the hub 65. The urging spring 74 urges the armature plate 78 away from the rotor 61. Rotational force received by the rotor 61 is transmitted to the hub 65 via the spring clutch 71 in a state where the rotor 61 contacts the armature plate 78. The rotational force of the hub 65 is directly transmitted to the rotary shaft 16. Thus, the hub 65 does not need to be movable along the axis L in relation to the rotary shaft 16. That is, no clearance or coupling structure for permitting movement along the axis L need to be provided between the hub 65 and the shaft 16. Thus, no large clearance needs to be created between the rotary shaft 16 and the hub 65. That is, the hub 65 is prevented from chattering with the rotary shaft 16. Also, the hub 65 does not need to be moved relative to the rotary shaft 16. Therefore, the performance of the electromagnetic clutch 60 is not degraded, for example, by a nonsmooth movement of the hub 65 relative to the rotary shaft 16.
(3) The electromagnetic clutch 60 has the spring clutch 71. The electromagnetic clutch 60 requires the first outer circumferential surface 61s and the second outer circumferential surface 67s, about each of which the spring clutch 71 is wound. The circumferential surface of the first recess 66a, which accommodates the urging spring 74, is coaxial with the first outer circumferential surface 61s and the second outer circumferential surface 67s. The hub 65 has the first recess 66a at a position radially inside of the first outer circumferential surface 61s and the second outer circumferential surface 67s. Thus, although the electromagnetic clutch 60 has the spring clutch 71 and the urging spring 74, the size of the electromagnetic clutch 60 is not undesirably increased.
(4) The front end 74a of the urging spring 74 presses the center portion of the armature plate 78, thereby urging the armature plate 78 away from the rotor 61. The urging spring 74 supports the armature plate 78 in such a manner that the armature plate 78 is not inclined with respect to the axis L. Thus, the second friction surface 72f is prevented from being inclined with respect to the first friction surface 61f. Accordingly, the armature 72 reliably adheres to the rotor 61, which improves the accurate performance of the electromagnetic clutch 60.
(5) After a current in the forward direction to the electromagnetic coil 62 is stopped, the magnetic flux of the permanent magnet 73 couples the armature 72 to the rotor 61. The spring clutch 71 couples the rotor 61 to the hub 65. As a result, power can be transmitted from the rotor 61 to the hub 65. Therefore, compared to a case in which the rotor 61 is coupled to the armature 72 by means only of the magnetic flux of the permanent magnet 73, the maximum transmittable power of the electromagnetic clutch 60 is increased. Accordingly, the maximum transmittable power from the engine E to the rotary shaft 16 is increased. The size of the permanent magnet 73 does not need to be increased to increase the density of magnetic flux. Also, the first friction surface 61f and the second friction surface 72f do not need to be enlarged to increase the frictional force between the first friction surface 61f and the second friction surface 72f. The maximum transmittable power of the electromagnetic clutch 60 is increased without increasing the size of the clutch 60.

The preferred embodiment may be modified as follows.
As shown in Fig. 4, the permanent magnet 73 in the rotor 61 may be omitted. In this case, during a period in which the electromagnetic coil 62 is supplied with a current, the electromagnetic clutch 60 is engaged, and during a period in which the electromagnetic clutch 60 is not supplied with a current, the electromagnetic clutch 60 is disengaged.

The urging member does not need to be a spring, but may be formed by a pair of permanent magnets. For example, a first permanent magnet is accommodated in the first recess 66a, and a second permanent magnet is fixed to the armature plate 78. The first permanent magnet and the second permanent magnet are arranged to repel each other.

In contrast to the above illustrated embodiment, the electromagnetic clutch 60 may be switched from the disengaged state to the engaged state by supplying a current in the reverse direction to the electromagnetic coil 62. In this case, the electromagnetic clutch 60 is switched from the engaged state to the disengaged state by supplying a current in the forward direction to the electromagnetic coil 62. The orientation of the permanent magnet 73 is also inverted from that in the above illustrated embodiment.

The refrigerant compressor 10 does not need to be a single headed piston type compressor, but may be a doubleheaded piston type compressor.

The refrigerant compressor 10 may be a wobble type compressor. That is, the swash plate 24 does not need to be constructed to rotate integrally with the rotary shaft 16, and the rotary support 22 may be supported to be rotatable relative to the rotary shaft 16.

The refrigerant compressor 10 does not need to be a variable displacement type compressor, but may be a fixed displacement type compressor, in which the stroke of the pistons 27 is not variable.

As long as the electromagnetic clutch 60 is located between the rotating machine and the external driving source, the rotating machine is not limited to the piston type refrigerant compressor 10.

The first rotor does not need to be the rotor 61, but may be a sprocket or a gear.

## Claims

1. A power transmission mechanism (60) capable of transmitting power of an external driving source (E) to a rotary shaft (16) of a rotating machine (10), the rotating machine (10) has a housing (11, 12, 14), the power transmission mechanism (60) comprising:
a first rotor (61) rotatably supported by the housing (11, 12, 14), wherein the external driving source (E) inputs power to the first rotor (61), and the first rotor has a first circumferential surface (61s); and
a second rotor (65) rotating integrally with the rotary shaft (16), the second rotor (65) being arranged coaxially with the first rotor (61), the power transmission mechanism (60) being capable of transmitting power from the first rotor (61) to the second rotor (65),
the transmission mechanism being **characterized in that**
the second rotor (65) has a second circumferential surface (67s), and wherein the first circumferential surface (61s) and the second circumferential surface (67s) are located in a common imaginary cylinder that extends along an axis (L) of the rotary shaft (16),
the transmission mechanism further comprising:
an armature plate (78) located outside of the second rotor (65), the armature plate (78) being movable along the axis (L) of the rotary shaft (16), wherein the rotary shaft (16) has an end (16a) that faces the armature plate (78);
an electromagnetic coil (62) located inside of the first rotor (61), wherein, when supplied with a current, the electromagnetic coil (62) is capable of causing the armature plate (78) to adhere to the first rotor (61);
a spring clutch (71), wherein, in a state where the armature plate (78) adheres to the first rotor (61), the spring clutch (71) couples the second rotor (65) to the first rotor (61), the spring clutch (71) being wound about the first circumferential surface (61s) and the second circumferential surface (67s); and
an urging member (74) accommodated in the second rotor (65), wherein the urging member (74) urges the armature plate '78) away from the first rotor (61), and wherein the urging member (74) is located between the end (16a) and the armature plate (78).

2. The power transmission mechanism according to claim 1, **characterized in that** the urging member (74) has a pressing end (74a) that presses a center portion of the armature plate (78).

3. The power transmission mechanism (60) according to claim 1, **characterized in that** the second rotor (65) includes a hub cylinder (66) through which the rotary shaft (16) extends, and wherein the hub cylinder (66) accommodates the urging member (74).

4. A rotating machine (10) **characterized by:**
the power transmission mechanism (60) according to any one of claims 1 to 3, and
the rotary shaft (16).

5. The rotating machine (10) according to claim 4, **characterized by** a compression mechanism (27) that is driven by the rotary shaft (16).
